# EUROPEAN PATENT APPLICATION

(11) **EP 4 725 811 A1**
(43) Date of publication of application: **15.04.2026**
(21) Application number: 25208065.0
(22) Date of filing: 10.10.2025
(51) Int. Cl.: B62D 49/06, B62D 55/06, B62D 55/084

(54) **RADIO-CONTROLLED VEHICLE**

(30) Priority: 10.10.2024 IT 202400022560
(71) Applicant: MDB SRL, 66034 Lanciano (CH) (IT)
(72) Inventor: DI BIASE, Mario, 66034 Lanciano (CH) (IT)
(74) Representative: Studio Torta S.p.A.

(57) **Abstract**

A radio-controlled vehicle (1) with a frame (2), a powertrain (4), a control system (6), a kinetic unit (3; 3I; 3II) movable on a support plan (XY), and a remote control (7); wherein, the frame (2) has: a first longitudinal member (13; 13I) and a second longitudinal member (13; 13II), and one or more crossmembers (14; 14'; 14''); wherein, the vehicle (1) has an adjustment system (16) having a drive unit (17), which is fixed to a respective crossmember (14), a rod (32; 32I) and a sliding member (21; 21I), which is fixed to a respective kinetic unit (3; 3I; 3II); the rod (32; 32I) being fixed at a first end to the drive unit (17) and at a second end to the sliding member (21; 21I) ; wherein, the rod (32; 32I) is configured to transmit to the sliding member (21; 21I) the motion generated by the drive unit (17).

## Description

### CROSS-REFERENCE TO RELATED APPLICATIONS

This patent application claims priority from Italian patent application no. 102024000022560 filed on October 10, 2024, the entire disclosure of which is incorporated herein by reference.

### FIELD OF THE ART

This Patent Application for an invention relates to an improved radio-controlled vehicle.

In particular, the present invention relates to a radio-controlled vehicle for carrying out agricultural, green maintenance or land reclamation work.

### PRIOR ART

It is known to carry out agricultural and green maintenance work (e.g. mowing grass, shrubs and bushes) by means of a radio-controlled vehicle configured to operate on grounds with slopes of up to 60°. Typically, this type of radio-controlled vehicle is configured to actuate a flail mower or other type of tool.

Radio-controlled vehicles of the known type operate in highly precarious conditions on uneven grounds or where obstacles are present. For example, the ground may have holes/pitches/areas with landslide or moving soil; in addition, obstacles may be found on the ground such as boulders, shrubs and trunks.

Radio-controlled vehicles of the known type have the disadvantage that the tracks or the frame of the vehicle may be blocked and/or damaged while driving. This can be a dangerous condition especially on steep slopes. In fact, the radio-controlled vehicle, in addition to being a heavy mechanical body in itself, actuates a tool, such as a flail mower, which is equally heavy and bulky.

On steep slopes, an operator may not be in a position to intervene to release the vehicle in order to get it moving again. In such cases, it may be necessary to require additional machinery and the assistance of other operators in order to perform the operation safely.

The aim of the present invention is to provide a radio-controlled vehicle that facilitates the recovery of the vehicle to normal running conditions, even on extremely steep slopes.

### SUMMARY

According to the present invention, a radio-controlled vehicle is provided as mentioned in the appended Claims.

According to the present invention, a method of operating on a radio-controlled vehicle, as mentioned in the appended claims, is provided.

### BRIEF DESCRIPTION OF THE DRAWINGS

To better understand the present invention preferred embodiments thereof will be now described, for merely exemplary and non-limiting purposes, with reference to the appended drawings, wherein:

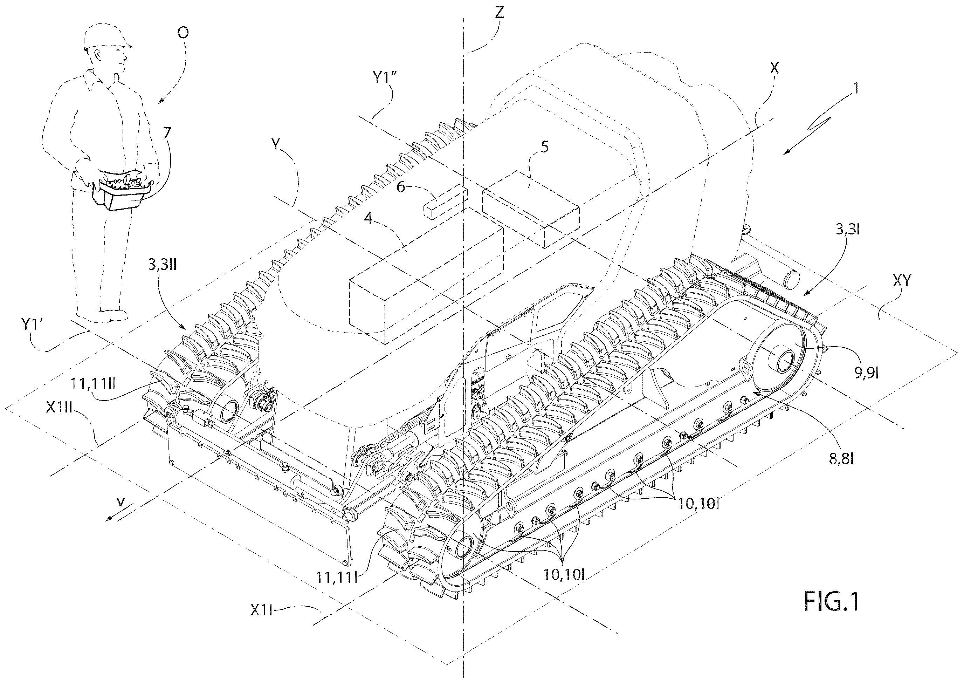

- Figure 1 is a front perspective view of a radio-controlled vehicle according to the present invention;
- Figure 2 is a front view of the radio-controlled vehicle of Figure 1 in an operating configuration;
- Figure 3 is similar to Figure 2 and shows the radio-controlled vehicle of Figure 1 in a further operating configuration;
- Figure 4 is an exploded view, with some parts removed for clarity, of a detail of Figure 1; and,
- Figures 5A and 5B show a detail of the radio-controlled vehicle of Figure 1 in respective different operating configurations.

### PREFERRED EMBODIMENT OF THE INVENTION

Number 1 globally denotes a radio-controlled vehicle according to the present invention.

The radio-controlled vehicle 1 has:
- a longitudinal axis X, also known as a roll axis, substantially parallel to a support plan XY of the radio-controlled vehicle 1;
- a vertical axis Z, also known as a yaw axis, substantially perpendicular to the support plan XY; and
- a transverse Y axis, also known as the pitch axis, which is substantially perpendicular to both the longitudinal axis X and the vertical axis Z.

Hereinafter and in the figures this reference system is used for all the components of the radio-controlled vehicle 1.

Terms such as front, rear, upper, lower, right, left (or similar) are used with reference to the normal operation of the radio-controlled vehicle 1 when it moves forward in the forward direction v on the support plan XY (plan parallel to the plan XY).

The suffixes I and II are used to indicate the components on the left-hand side and, respectively, on the right-hand side of the radio-controlled vehicle 1 according to the forward direction v.

Superscripts ' and '' are used to indicate the components on the front side and, respectively, on the rear side of the radio-controlled vehicle 1.

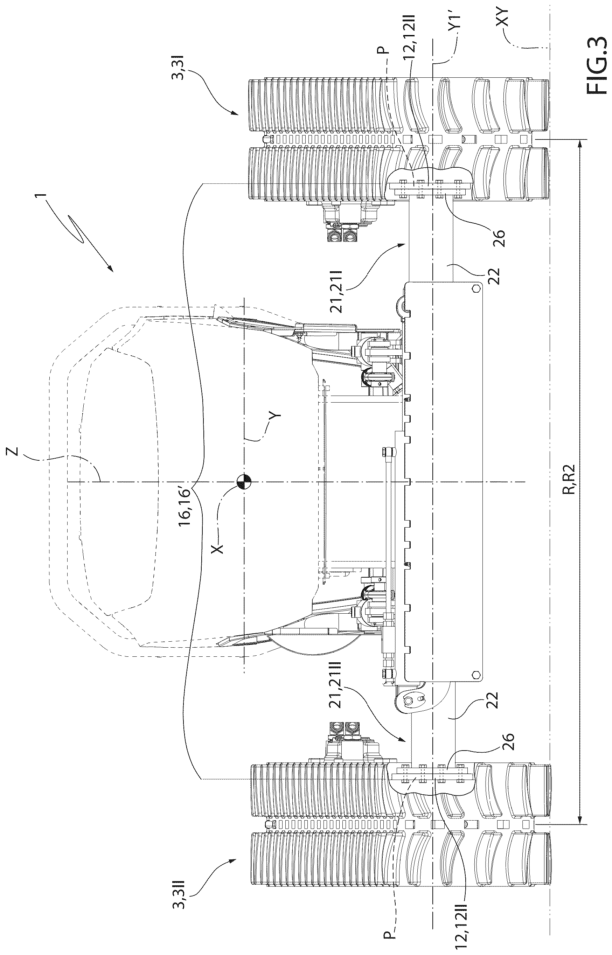

Similarly to what has been described in EP 3606629 B1, the teachings of which are to be considered included herein without repeating them for the sake of brevity, the radio-controlled vehicle 1 comprises: a frame 2 (Figure 3), a kinetic unit 3, a powertrain 4, a hydraulic drive unit 5, a control system 6 and a remote control 7. The remote control 7 is configured (as known) to exchange signals and/or data with the control system 6, so that an operator O can remotely control the actuation of the vehicle 1.

Advantageously, the vehicle 1 is configured to actuate a tool (of the types known and not shown) selected from within a group of tools differing from each other. By way of example, a tool can be: a bucket (for digging and/or transporting material); a flail mower; a fork; a pruning tool; or others.

Each kinetic unit 3 is an undercarriage comprising, in a way that is known and schematically shown: a support structure 8, which has a longitudinal axis X1 and is configured to be connected to the frame 2; a drive wheel 9; a plurality of deflection wheels 10; and, a track 11, which is fitted around the deflection wheels 10 and the drive wheel 9. The drive wheel 9 is configured to drive the track 11.

Specifically, each kinetic unit 3 comprises an attachment plate 12 that is transverse to the support plan XY and facing, in use, the frame 2.

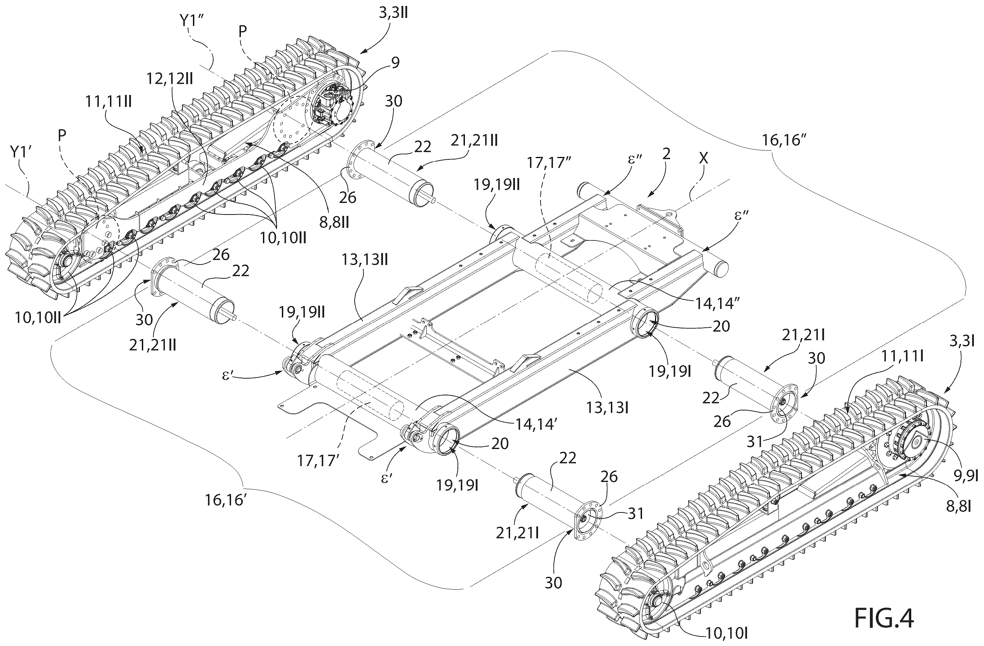

According to the example shown in Figure 4, frame 2 comprises, in a way that is known and schematically shown: a left longitudinal member 13I and a right longitudinal member 13II, parallel to the longitudinal axis X; a front crossmember 14' and a rear crossmember 14", which transversely connect together the left longitudinal member 13I and the right longitudinal member 13II. Without losing generality, the number and the position of both the longitudinal members 13 and crossmembers 14 are variable. Each longitudinal member 13 has a front end ε' and a rear end ε" respectively.

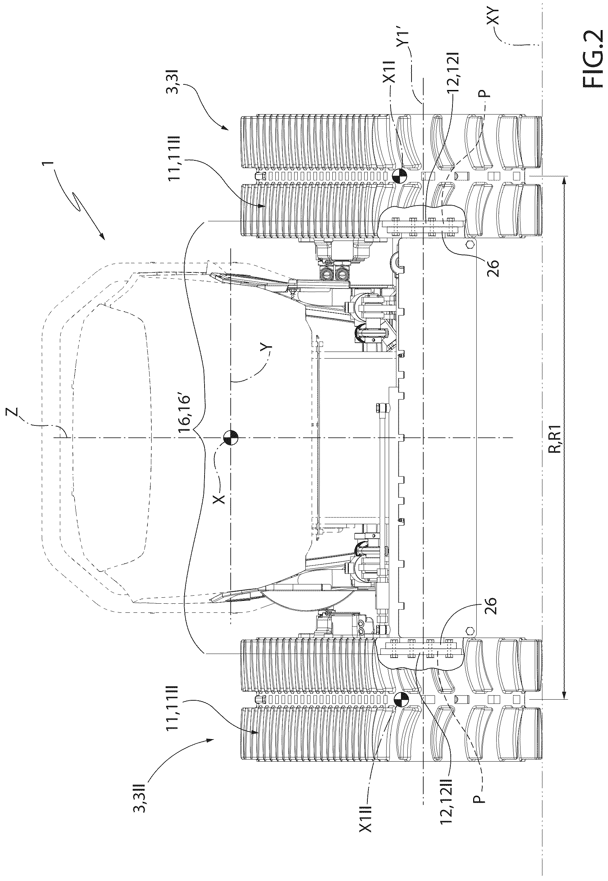

Advantageously, the wheel track R (Figure 2) of vehicle 1 is variable. Wheel track R means the distance between the tread centre of a track 11I and the tread centre of a parallel track 11II. Figures 2 and 3 show, schematically and by way of example, two possible widths of the wheel track R1 and R2 of the radio-controlled vehicle 1.

The vehicle 1 comprises, for each crossmember 14, a wheel track adjustment system 16. Hereinafter, reference will be made to a generic crossmember 14 and a generic adjustment system 16, the characteristics of which are to be considered valid *mutatis mutandis* for all the crossmembers 14 and adjustment systems 16.

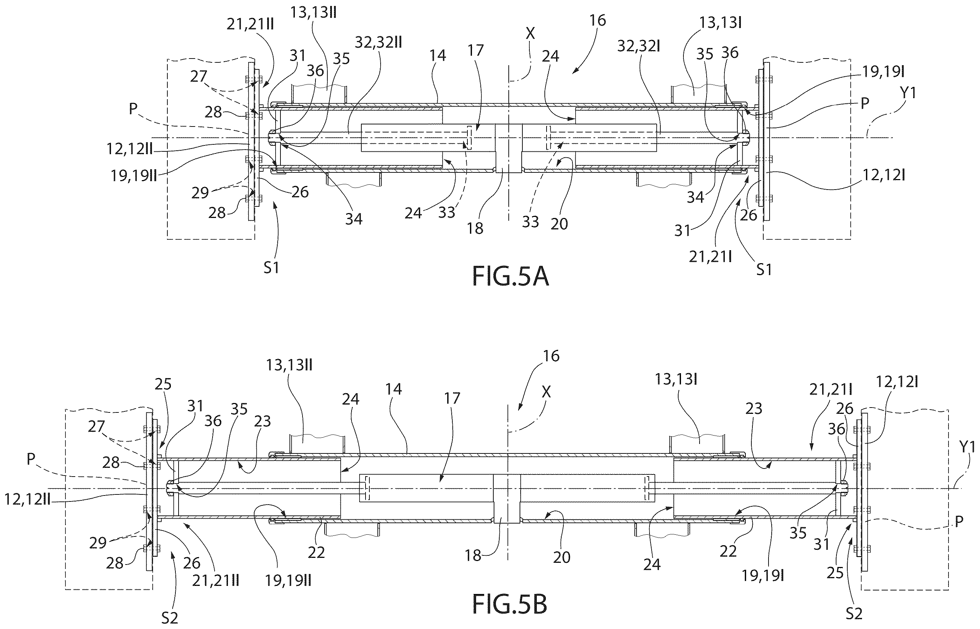

As shown in Figures 5A and 5B, the adjustment system 16 comprises, in turn, a drive unit 17 which is fixed to the frame 2. In particular, according to the example shown, the drive unit 17 is fixed to a respective crossmember 14 by means of a fixing element 18, for example a bracket or a pin or an equivalent component. A drive unit 17 can consist of a single actuator or a plurality of actuators distinct from each other. Each actuator of a drive unit 17 can be selected from within a group of actuators differing in type from each other. For example, an actuator can be a two-rod hydraulic cylinder, as described in EP 3606629 B1, or two separate hydraulic cylinders or worm-rack type actuators or electromagnetic actuators. In case the drive unit 17 comprises a plurality of actuators, these can be driven together or separately.

According to the example shown, the crossmember 14 is a guide having a tubular body 42 extending along an axis Y1. Each guide 14 is connected to the left longitudinal member 13I and to the right longitudinal member 13II so as to be transverse, substantially perpendicular, to the longitudinal axis X of the frame 2.

The guide 14 has a left opening 19I and a right opening 19II, which put an inner longitudinal cavity 20 in communication with the outside at a left end and a right end, respectively. According to the example shown, the guide 14 is cylindrical.

The adjustment system 16 comprising one or more sliding members 21, and one or more rods 32. In particular, each rod 32 is interposed between the drive unit 17 and the respective sliding member 21 and is configured to transmit the actuation from the drive unit 17 to the respective sliding member 21, as will be further shown below.

According to the example shown in the figures, the adjustment system 16 comprises a left sliding member 21I and a right sliding member 21II. Each sliding member 21 is slidably coupled inside the guide 14 through a respective opening 19.

Each sliding member 21 is configured to form a form coupling with a respective portion of the guide 14. A single sliding member 21 will be described herein for the sake of brevity, the characteristics of which are to be considered as valid *mutatis mutandis* for the other sliding members 21 as well.

According to the example shown, each sliding member 21 is a tubular body 22 having a cylindrical shape longitudinally delimited by an inner end 24 and an outer end 25. The body 22 has an inner longitudinal cavity 23. Advantageously, the fact that the body 22 is cylindrical-shaped makes it possible to reduce the possible causes of the vehicle 1 getting stranded during use. In fact, the absence of edges means that shrubs or other plant material will not find a foothold to latch on to, which could potentially result in the radio-controlled vehicle 1 jamming.

According to the example shown, the inner end 24 is inserted inside the guide 14 in a sliding manner along the axis Y1. The outer end 25 protrudes axially outside the respective opening 19 of the guide 14.

Each sliding member 21 further comprises a flange 26 near the outer end 25. The flange 26 is configured to form a non-permanent coupling, in particular a connection bolted with a respective portion P of the plate 12. Each flange 16 is bolted to the respective portion P of the plate 12.

In particular, the flange 26 is in the form of a circular crown with a plurality of holes 27. Each hole 27 is configured to be crossed, in use, by a respective bolt 28. Similarly, the respective portion P of the plate has a plurality of holes 29, which are configured to be aligned with respective holes of the flange 26 so as to make the connection by means of bolts 28 possible.

According to the example shown, the flange 26 has a partially circular perimeter; in other words, it has a cut portion 30 (Figure 4). This allows to reduce the overall dimensions, making the radio-controlled vehicle 1 particularly compact.

Each sliding member 21 further comprises a coupling wall 31, which is fixed directly or indirectly to the flange 26. According to the example shown, the coupling wall 31 is fixed to the tubular body 22. In particular, the coupling wall 31 is arranged within the cavity 23 of the tubular body 22 and is transverse to the axis Y1. The coupling wall 31 is configured to be connected to the drive unit 17 as will be explained in more detail below.

The adjustment system 16 further comprises a left rod 32I and a right rod 32II. Each rod 32 and the guide 14 are mutually movable. In particular, each rod 32 is sliding along the axis Y1. Each rod 32 has an inner end 33, which is connected to the drive unit 17, and an outer end 34, which is connected to a respective sliding member 21. In particular, the outer end 34 of a rod 32 is fixed to the coupling wall 31 of a respective sliding member 21.

According to the example shown, the outer end 34 of the rod 32 forms a releasable connection with the respective coupling wall 31. In particular, the coupling wall 31 has a central hole 35, which is crossed by the outer end 34. The outer end 34 is fixed to the coupling wall by means of a fastening system 36 forming a form and/or interference coupling. The fastening system 36 can be selected from a group of fixing systems 36 differing in type from each other. For example, the fastening system 36 can be: a ring nut; a nut; a plug or an equivalent system.

Advantageously, the adjustment system 16 is configured to adjust the relative position between the left undercarriage 3I and the frame 2, and similarly between the right undercarriage 3II and the frame 2.

Without losing generality and according to a variant not shown, the adjustment system 16 may comprise a single sliding member 21 and a single rod 32 for each crossmember 14. In this case, the adjustment system 16 associated with a crossmember 14 is configured to move only one kinetic unit 3.

At each crossmember 14, by operating the respective drive unit 17, it is possible to adjust the relative position between each undercarriage 3I, 3II and the frame 2. Thus, depending on the slope of the ground, the support area of the radio-controlled vehicle 1 can be selectively varied.

Specifically, each rod 32 is movable from a fully closed inner position S1 (Figure 5A) to a fully open outer position S2 (Figure 5B), and vice versa. Each rod 32 can be moved independently of the other, in other words, each rod 32 is individually drivable. It is thus possible to achieve a configuration in which, for example, on board the same guide 14 one rod 32 is closed while the other rod 32 is open.

While driving the radio-controlled vehicle 1 it is possible that the ground and/or working conditions cause a kinetic unit 3 to jam. In this case, it is possible to intervene by detaching the kinetic unit 3, in particular the undercarriage 3, from the adjustment system 16 by directly intervening on the releasable connection formed between each sliding member 21 and the kinetic unit 3. In particular, it is possible to release the flange 26 of a sliding member 26 by loosening the releasable connection between the flange 26 and the respective P portion of the plate 12. In the case shown, it is sufficient to loosen the bolts 28 connecting the flange to the respective portion P of the plate P. This operation is very easy. In fact, the presence of a plurality of bolts 28 allows to distribute the clamping load over a plurality of contact surfaces, requiring less unscrewing force. This facilitates rescue operations, which can also take place in extremely difficult conditions, e.g. on steep slopes.

In addition, by acting on the flange 26, the rod 32 of the adjustment system 16 is preserved. In fact, during the rescue operation, the rod 32 is not subjected to direct forces by the operators who intervene, instead, on the bolts 28. In addition, once the sliding member 21 is separated from the kinetic unit 3, the rod 21 remains closed within the sliding member 21 itself. In fact, the coupling wall 26 closes the cavity 23, and the rod 21 is therefore contained entirely within the volume delimited by the guide 14 and the respective sliding member 21. This ensures that the integrity of the adjustment system 16, in particular of the rod 32, is preserved even during intervention operations under the most extreme conditions.

## Claims

1. A radio-controlled vehicle comprising a frame (2) having a first longitudinal axis (X); the vehicle (1) comprising: a powertrain (4), a control system (6), a kinetic unit (3; 3I; 3II) movable on a support plan (XY), and a remote control (7); wherein the frame (2) comprises: a first longitudinal member (13; 13I) and a second longitudinal member (13; 13II), parallel to the first axis (X), and one or more crossmembers (14), each of which connects together the first longitudinal member (13; 13I) and the second longitudinal member (13; 13II); wherein, the vehicle (1) comprises an adjustment system (16), which is configured to move the frame (2) and the kinetic unit (3; 3I; 3II) reciprocally with each other; wherein, the adjustment system (16) comprises, in turn, a drive unit (17), a rod (32; 32I) and a sliding body (21; 21I); wherein, the drive unit (17) is fixed to a respective crossmember (14); wherein, the sliding body (21; 21I) is fixed to a respective kinetic unit (3; 3I; 3II); wherein, the rod (32; 32I) has a first end (33), which is connected to the drive unit (17), and a second end (34), which is connected to the sliding body (21; 21I); wherein the rod (32; 32I) is interposed between the drive unit (17) and the sliding body (21; 21I) and is configured to transmit to the sliding body (21; 21I) the motion generated by the drive unit (17).

2. A radio-controlled vehicle according to claim 1, the sliding body (21; 21I) having a first portion (31), which is connected to the rod (32; 32I), and a second portion (26) which is connected to a respective portion (P) of the kinetic unit (3; 3I; 3II).

3. A radio-controlled vehicle according to claim 2, wherein the sliding body (21; 21I) comprises a first tubular body (22) having a first cavity (23) facing outward through a first end (24).

4. A radio-controlled vehicle according to claim 3, wherein said first portion (31) of the sliding body (21; 21I) is a docking wall disposed within said first cavity (23); wherein, the rod (32; 32I) passes through the first end (24) and is housed, at least partially, within said first cavity (23).

5. A radio-controlled vehicle according to claim 4, wherein the first portion (31) closes transversely the first cavity (23); the rod (32; 32I) being interposed between the first portion (31) and the drive unit (17) and being, at least partially, shielded by the first tubular body (22) of the sliding body (21; 21I).

6. A radio-controlled vehicle according to any claim from 2 to 5, wherein said second portion (26) is connected to a respective portion (P) of the kinetic unit (3; 3I; 3II) through a releasable connection; in particular, said second portion (26) is bolted to the kinetic unit (3; 3I; 3II).

7. A radio-controlled vehicle according to claim 6, wherein said second portion (26) is a flange which protrudes radially outward of a second end (25) of the first tubular body (22); wherein, the flange (26) has a plurality of holes (27) each of which is aligned, in use, with a hole (29) of a respective portion (P) of the kinetic unit (3; 3I; 3II).

8. A radio-controlled vehicle according to any preceding claim, wherein each crossmember (14) comprises a second tubular body (42) having a second axis (Y1) and a second cavity (20); wherein, said drive unit (17) is fixed within said crossmember; wherein, the first tubular body (22) of the sliding body (21; 21I) is configured to form to shape coupling with the second tubular body (42) of the crossmember; in particular, the first tubular body (22) is slidable within del second tubular body (42); wherein the sliding body (21; 21I) has a second end, which is inserted within said second cavity (20); wherein, the rod (32; 32I) is housed within the volume delimited by the first tubular body (22) and the second tubular body (42); in particular, the first tubular body (22) and the second tubular body (42) are cylindrical.

9. A radio-controlled vehicle according to any preceding claim, wherein the adjustment system (16) comprises a second sliding body (21; 21II) and a second rod (32; 32II); wherein, the second rod (32; 32II) has a first end (33), which is connected to the drive unit (17), and a second end (34), which is connected to the second sliding body (21; 21I); wherein the second rod (32; 32I) is interposed between the drive unit (17) and the second sliding body (21; 21I) and is configured to transmit to the second sliding body (21; 21I) the motion generated by the drive unit (17).

10. A radio-controlled vehicle according to claim 9, wherein the drive unit (17) comprises a plurality of actuators, each of which is configured to activate a respective rod (32; 32I; 32II); wherein, said actuators can be activated synchronously or independently of each other.
